# EUROPEAN PATENT SPECIFICATION

(11) **EP 4 088 560 B1**
(45) Date of publication and mention of the grant of the patent: **10.12.2025**
(21) Application number: 22171470.2
(22) Date of filing: 03.05.2022
(51) Int. Cl.: A01D 41/127, A01D 41/14, A01D 61/00

(54) **GRAIN LOSS SENSING**
KORNVERLUSTMESSUNG
DÉTECTION DE PERTE DE GRAIN

(30) Priority: 10.05.2021 GB 202106634
(43) Date of publication of application: 16.11.2022
(73) Proprietor: AGCO International GmbH, 8212 Neuhausen am Rheinfall (CH)
(72) Inventor: HERMANN, Dan, 8930 Randers NØ (DK)
(74) Representative: AGCO Intellectual Property Department

(56) References cited:
- EP-A1- 2 681 984
- EP-A1- 2 702 855
- EP-A1- 3 566 565
- US-A1- 2016 113 199

## Description

### TECHNICAL FIELD

The present invention relates, in general, to apparatus and methods for monitoring grain loss associated with an agricultural machine.

### BACKGROUND

Self-propelled agricultural machines, specifically combine harvesters, perform multiple harvesting functions within a single machine, including picking, threshing, separating, and cleaning of crop. Such processes often result in the loss of grain, hereinafter referred to as grain loss. Grain loss can occur at one or more points within the harvester, whilst performing any of the above mentioned harvesting tasks, and may occur due to incorrect operation of the machine, operating issues or damage, for example. It is therefore beneficial to be able to monitor this loss, and automate or at least prompt an operator to correct or adjust one or more operational factors to reduce this loss. To achieve this, an accurate measurement of the grain loss is needed.

Known sensors used to measure grain loss include "impact" or acoustic sensors, which are configured to measure the impact of grain and other material incident on a detection surface of the sensor. Grain can be distinguished from other material incident on the sensor through analysis of the signal produced upon impact of material with the detection surface. Specifically, due to the kernels of grain being much harder than the straw and chaff, impacts of the kernels with a detection surface have a characteristic sensor response, namely a fast rise time, with a generally higher amplitude when compared with sensor response associated with the impact of straw and/or chaff with the sensor. Therefore, by measuring the force and/or frequency of such impacts, and in particular those associated with grain incident on the detection surface, it is possible to determine a measurement or at least a prediction of the amount of grain present in the material.

One particular source of grain loss is at the header coupled at the front of the harvester. Known solutions include the use of cameras suitably positioned to image the ground underneath or behind the header and used to identify grain present on the ground. However, grain already on the ground prior to harvesting is also present in the images. Accordingly, to make use of such systems a calibration needs to be performed which necessarily includes measuring or estimating a baseline measure of the grain already on the ground. It will be appreciated that this can vary across a field / region to be harvested and, as such, an accurate measurement of the grain loss associated with the header is difficult to obtain. It would therefore be advantageous to provide improved apparatus and methods for monitoring grain loss, particularly grain loss associated with a header of a harvester.

Example prior art solutions include those described in EP2681984A1 which describes a grain loss measuring element associated with a header, EP3566565A1 which describes a sensor arrangement associated with a belt of a header, US2016/113199A1 which describes a corn header with a kernel sensor and EP2702855A1 which describes a corn head row unit with a loss detection device.

### SUMMARY OF THE INVENTION

In an aspect of the invention there is provided a header for a harvesting machine, the header comprising: one or more crop-engaging components; and a sensing unit positioned within a flow path of material and downstream of at least one of the one or more crop-engaging components; wherein the sensing unit is configured, in use, to measure an impact parameter indicative of a force and/or frequency of material incident on a detection surface of the sensing unit.

Advantageously, the force and/or frequency of material incident on the detection surface may be indicative of an amount of grain present in material interacting with the sensing unit. Positioning the sensing unit downstream of the crop-engaging component can be used to monitor an efficiency of the component in performing its intended function. For example, where the crop-engaging component is configured to engage with and convey the crop material in a given direction (e.g. belts, augers, etc.), the sensing unit may be used to obtain a measurement of material in a direction other than the transfer direction of the component (e.g. flow of material in a substantially longitudinal direction with respect to a belt configured to convey material in a substantially transverse direction across the header). Detecting an amount of grain present in this flow path provides a measure of grain loss associated with the particular component and the header as a whole. Further, such an arrangement overcomes drawbacks associated with the prior art which use cameras to monitor grain loss, as grain lying on the ground before the harvesting process is not measured as it does not engage with the header and therefore come into contact with the sensing unit.

The sensing unit may preferably be positioned adjacent to the crop-engaging component(s).

The crop-engaging component/s may comprise a cutter bar. As will be appreciated, a cutter bar may be provided to cut standing crop. The crop-engaging component/s may comprise a reel. As will be appreciated, a reel may be provided to guide cut crop into the header.

The crop-engaging component/s may include an auger. The auger/s may be suspended substantially transversely at least partly across a width of the header, and be configured in use to convey cut crop material inwardly towards the centre of the header and towards a feederhouse of a coupled agricultural harvester. In such embodiments, the sensing unit may be positioned behind the auger/s (in the direction of travel of the harvester, in use) such that crop material which passes over the auger and not conveyed substantially transversely towards the centre of the header is incident on the detection surface of the sensing unit.

The crop-engaging component/s may include one or more belts, e.g. a driven draper belt, extending at least partly across a width of the header and configured in use to convey the cut crop material inwardly towards the centre of the header and towards a feederhouse of a coupled agricultural machine. In such embodiments, the sensing unit may be positioned behind the belt/s (in the direction of travel of the harvester, in use) such that crop material which passes over the belt and not conveyed substantially transversely towards the centre of the header is incident on the detection surface of the sensing unit.

The crop-engaging component/s may include a plurality of belts, e.g. at least one belt configured to convey material in a substantially transverse direction across a width of the header and at least one belt configured to convey material in a substantially longitudinal direction (e.g. with respect to a direction of travel of a coupled harvester, in use). In such an arrangement, the plurality of belts may be configured such that an interface is formed therebetween, e.g. where conveyed crop material is passed from one belt to another. The interface may form a gap through which at least some of the conveyed crop material may fall. In such embodiments, the sensing unit may be positioned adjacent said gap such that material falling through the gap may impact the detection surface of the sensing unit.

In a similar manner, the crop-engaging component/s may include, for example, at least one auger configured to convey material in a substantially transverse direction across a width of the header and at least one belt configured to convey material in a substantially longitudinal direction (e.g. with respect to a direction of travel of a coupled harvester, in use). In such an arrangement, an interface may be formed between the transverse auger and the longitudinal belt, i.e. where conveyed crop material is passed from the auger/s to the belt. The interface may form a gap through which at least some of the conveyed crop material may fall. In such embodiments, the sensing unit may be positioned adjacent said gap such that material falling through the gap may impact the detection surface of the sensing unit.

The sensing unit may be suitably coupled, e.g. mounted or otherwise fixed to a portion of the header. In some embodiments the sensing unit is suitably coupled to a table of the header. Whilst the primary function of the table may be to support functional components of the header, the header may be configured such that crop material which is not engaged and conveyed by the various crop-engaging components of the header may fall into or be otherwise directed into the table. Accordingly, in some embodiments the sensing unit may be positioned within the header, and specifically in a position with respect to the table of the header such that material falling into or otherwise being directed into the table may impact the detection surface of the sensing unit.

The sensing unit may comprise an acoustic-electric sensing means configured to output an electrical signal which is proportional to the force of material incident on the detection surface of the sensing unit. An acoustic sensor may measure vibrations associated with the contact between the material and the detection surface. The sensing unit may comprise a piezoelectric sensor, operable to output an electrical signal proportional to the impact force of material incident on the detection surface.

In further embodiments, the sensing unit may comprise electrical, optical and/or mechanical sensors, for example, configured to measure an impact parameter associated with the impact of material with a detection surface.

The header may comprise multiple sensing units coupled or otherwise fixed thereto, and configured, in use, to measure an impact parameter indicative of a force and/or frequency of material incident on respective detection surfaces thereof. The multiple sensing units may be equally spaced with respect to the header, e.g. equally spaced across a width of the header. Using multiple sensing units, a measure of grain loss across the header may be obtained.

In a further aspect of the invention there is provided a control system for controlling operation of one or more systems of an agricultural machine, the control system comprising one or more controllers configured to: receive an impact signal from a sensing unit of a header as described in the preceding aspect of the invention, the impact signal comprising a measurement of an impact parameter indicative of a force and/or frequency of material incident on a detection surface of the sensing unit; determine, in dependence on the received impact signal, a measurement of grain loss associated with the agricultural machine; and generate and output one or more control signals for controlling operation of one or more systems of the agricultural machine in dependence on the determined grain loss.

The control system may be operable to control operation of a user interface associated with the machine, e.g. to provide an indication to the operator of the machine of the determined grain loss associated with the measured impact parameter. The indicator may comprise a graphical indicator, such as a visual indicator provided on a display within the machine, or an audible or haptic indication, for example. The indicator may inform the operator of the determined grain loss, and/or one or more actions to be taken to improve / reduce the grain loss.

The control system may be operable to control an operational speed of the machine or one or more components thereof. The operational speed may be a forward speed of the machine. For example, the control system may be operable to reduce a forward speed of the machine in dependence on the determined grain loss. In this way, the control system may provide an operator of the machine with additional time to perform necessary correcting adjustments of, for example, operational parameters of the machine to address or reduce the grain loss. The control system may be operable to bring the machine to a stop so that appropriate actions can be performed to address or reduce the grain loss.

The control system may be operable to control an operational speed of one or more components of the machine. For example, the control system may be operable to control an operational speed of the header or components thereof, e.g. a reel, auger(s), conveyor(s), belt(s) and the like, or other implement suitably coupled to the machine in dependence on the determined grain loss. The control system may be operable to control a height, position, orientation, etc. of the header or one or more components thereof in dependence on the determined grain loss.

The control system may be communicable with one or more further control units associated with the operation of the header, its component(s) and/or the agricultural machine itself. The control system may be operable to receive, e.g. from the one or more further control units, one or more operational signals indicative of one or more operational parameters of the header, component/s and/or machine. The one or more operational parameters may include a forward speed of the agricultural machine. The one or more operational parameters may include an operational speed of the header, and specifically one or more components thereof, e.g. a rotational speed of a reel of the header, and/or an operational speed of one or more augers or belts.

The one or more operational parameters may be indicative of an expected or predicted speed at which crop material may engage with the sensing unit. The control system may be operable to determine a measurement of grain loss in dependence on operational signal/s. For example, the expected or predicted speed of material at the detection surface of the sensing unit may be associated with an expected impact force of different material types incident on the surface, which may therefore be used to discriminate between grain and material other than grain (MOG), for example.

The one or more controllers may collectively comprise an input (e.g. an electronic input) for receiving one or more input signals indicative of X. The one or more controllers may collectively comprise one or more processors (e.g. electronic processors) operable to execute computer readable instructions for controlling operation of the control system, for example to Y. The one or more processors may be operable to generate one or more control signals for Z. The one or more controllers may collectively comprise an output (e.g. an electronic output) for outputting the one or more control signals.

In a further aspect of the invention there is provided a method of controlling operation of one or more systems of an agricultural machine, comprising: receiving an impact signal from a sensing unit of a header as described in the preceding aspects of the invention, the impact signal comprising a measurement of an impact parameter indicative of a force and/or frequency of material incident on a detection surface of the sensing unit; determining, in dependence on the received impact signal, a measurement of grain loss associated with the agricultural machine; and controlling operation of one or more systems of the agricultural machine in dependence on the determined grain loss.

The method may comprise controlling operation of a user interface associated with the machine, e.g. to provide an indication to the operator of the machine of the determined grain loss associated with the measured impact parameter. The indicator may comprise a graphical indicator, such as a visual indicator provided on a display within the machine, or an audible or haptic indication, for example. The indicator may inform the operator of the determined grain loss, and/or one or more actions to be taken to improve / reduce the grain loss.

The method may comprise controlling an operational speed of the machine or one or more components thereof. The operational speed may be a forward speed of the machine. For example, the method may comprise reducing a forward speed of the machine in dependence on the determined grain loss. In this way, an operator of the machine may be provided with additional time to perform necessary correcting adjustments of, for example, operational parameters of the machine to address or reduce the grain loss. The method may comprise bringing the machine to a stop so that appropriate actions can be performed to address or reduce the grain loss.

The method may comprise controlling an operational speed of one or more components of the machine. For example, the method may comprise controlling an operational speed of the header or components thereof, e.g. a reel, auger(s), conveyor(s), belt(s) and the like, or other implement suitably coupled to the machine in dependence on the determined grain loss. The method may comprise controlling a height, position, orientation, etc. of the header or one or more components thereof in dependence on the determined grain loss.

The method may comprise receiving or obtaining one or more operational signals indicative of one or more operational parameters of the header, component/s and/or machine. The one or more operational parameters may include a forward speed of the agricultural machine. The one or more operational parameters may include an operational speed of the header, and specifically one or more components thereof, e.g. a rotational speed of a reel of the header, and/or an operational speed of one or more augers or belts.

The one or more operational parameters may be indicative of an expected or predicted speed at which crop material may engage with the sensing unit. Using this, a measurement of grain loss may be determined. For example, the expected or predicted speed of material at the detection surface of the sensing unit may be associated with an expected impact force of different material types incident on the surface, which may therefore be used to discriminate between grain and material other than grain (MOG), for example.

In a further aspect of the invention there is provided an agricultural machine comprising or being suitably coupled to a header of any preceding aspect of the invention; and/or comprising a control system of any preceding aspect of the invention; and/or configured to perform the method according to the preceding aspect of the invention. Optionally, the agricultural machine comprises a combine harvester.

### BRIEF DESCRIPTION OF THE DRAWINGS

One or more embodiments of the invention will now be described, by way of example only, with reference to the accompanying drawings, in which:
- Figure 1: schematically illustrates an agricultural machine embodying aspects of the present invention;
- Figure 2: is a plan schematic view of an embodiment of a harvesting header of the present invention;
- Figure 3: is a side schematic view of an embodiment of a harvesting header;
- Figure 4: is a schematic diagram illustrating an embodiment of a control system in accordance with the invention;
- Figure 5: is a flowchart illustrating an embodiment of a method in accordance with the invention; and
- Figures 6 to 10: are a series of photographs illustrating aspects of the invention.

### DETAILED DESCRIPTION

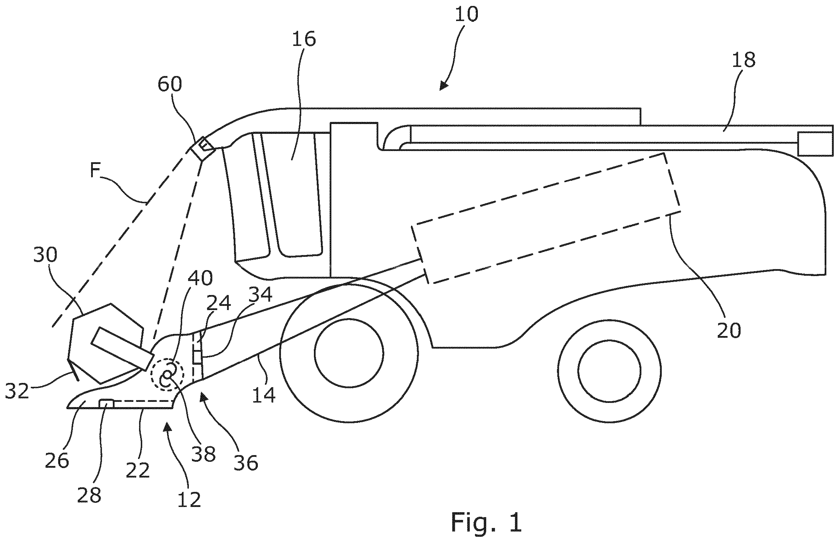

Figures 1 to 3 illustrate an agricultural machine in the form of a combine harvester 10 and implement in the form of a header 12 coupled to the harvester 10 embodying aspects of the present invention.

The harvester 10 has the header 12 coupled in a known manner to a feederhouse 14 of the harvester 10. The harvester 10 also includes an operator cab 16, unloading auger 18 and a crop processing mechanism, indicated generally at 20, which is operable to separate grain and other crop material from the supporting plant matter. Various different configurations for the crop processing mechanism 20 are known, and will be apparent to the person skilled in the art so will not be described in detail herein. The invention is not limited in this sense.

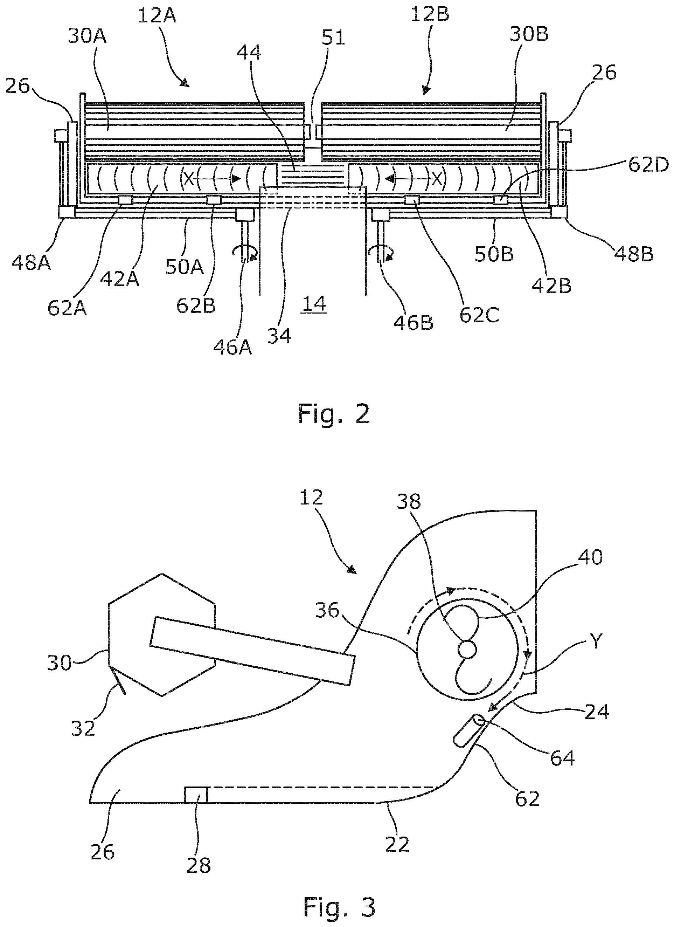

The header 12 has a frame comprising a table (alternatively termed a bed or floor) 22, a rear wall 24 and two side walls 26. A standing crop such as cereals or maize is cut by a cutter bar 28 which is disposed on a leading edge of the table 22 as the harvester 10 advances in a forward direction across a crop field. A reel 30 is provided which guides the cut crop into the header 12. The reel 30 includes a plurality of guide bars 32, here six, which are mounted on (hexagonal) wheels which rotate around a transverse axis above the cutter bar 28. As particularly shown in Figure 2, the illustrated header 12 comprises two crop gathering mechanisms or sub-assemblies (respectively identified by the suffixes A and B) 12A, 12 B each having a respective reel 30A, 30B.

In Figure 1, each sub-assembly 12A, 12B comprises an auger 36 which is suspended transversely across the width of the respective sub-assembly 12 in close proximity to the rear wall 24 and table 22. The auger 36 comprises a rotor core 38 supported for rotation by a support shaft (not shown). Screw-flighting 40 is secured to the rotor core 38. In operation, the auger 36A rotates and the flighting 40 engages the cut crop material so as to convey the crop material inwardly toward the centre of the header 12 e.g. in the direction of respective arrow X shown in Figure 2.

Figure 2 shows an alternative means for conveying the cut crop across the table 22 of the respective sub-assemblies 12A, 12B in the form of draper belts 42A, 42B which are driven conveyors extending across the respective portions of table 22 and which convey the cut crop inwardly in the direction of arrows X towards an opening 34.

In the illustrated embodiment in Figure 2, the header 12 includes a further belt 44 in a central section between the sub-assemblies 12A, 12B. This further belt 44 operates transversely to the draper belts 42A, 42B (having received cut crop deposited by the draper belts) and carries the cut crop through the opening 34 and into the feederhouse 14 for onward handling by the crop processing mechanism 20.

Here, the crop gathering mechanisms (reels 30 and draper belt 42 or auger 36) of one header sub-assembly are operable independently of the (or each) other.

In the embodiment of Figure 2, mechanical drive is provided by two separate (and independently driven) driveshafts 46A, 46B extending from the harvester 10 (suitably supported along respective sides of the feeder housing 14) to the header 12. Via one or more universal joints 48A, 48B and intermediate driveshafts 50A, 50B, the rotation of the driveshafts is transferred to drive rotation of the respective reels 30A, 30B. Further driveshafts (or driven spurs off the driveline to the reels) suitably power the draper belts 42A, 42B (or augers 36A in the embodiment of Figure 1). The drive to the crop gathering components 30, 36, 42 may suitably be supplied at the laterally outermost points of each sub-assembly as shown, with a central support, indicated generally at 51, supporting and journaling the inward end of the crop gathering components. Providing drive to the inward ends of the components, with support at the outward ends, is also possible.

As an alternative to mechanical drive, one or more of the crop gathering components may be provided with electric drive through one or more electric motors mounted on the header and driving the components directly. This arrangement is preferred where there are e.g. four or more sub-assemblies as the control connections become simpler than having multiple mechanical drive shafts, and the (generally shorter) header sections and sub-assemblies will require less power to drive.

The illustrated embodiments additionally include an imaging sensor in the form of a camera 60 is mounted on a foremost point of the operator's cab 16 and has a field of view F which encompasses the header 12, and in particular an operating region of the header 12 including each sub-assembly 12A, 12B, although the present invention is not limited in this sense.

As detailed herein, aspects of the present invention relate to determining a measurement of grain loss associated with the harvester 10, and in particular that associated with the header 12 when coupled to the harvester 10. To achieve this, sensing units 62A, 62B, 62C and 62D are provided (see Figures 2 and 3, specifically) which comprise respective detection surfaces 64. In use, the sensing units 62 are configured to measure an impact parameter indicative of a force and/or frequency of material incident on the detection surface 64. Grain can be distinguished from other material incident on the detection surface 64 through analysis of the signal produced upon impact of material therewith (see below discussion). In general, due to the kernels of grain being much harder than the straw and chaff, impacts of the kernels with a detection surface have a characteristic sensor response, namely a fast rise time, with a generally higher amplitude when compared with sensor response associated with the impact of straw and/or chaff with the detection surface 64 of the sensing unit 62. Therefore, by measuring the force and/or frequency of such impacts, and in particular those associated with grain incident on the detection surface 64, it is possible to determine a measurement or at least a prediction of the amount of grain present in the material.

In the embodiment illustrated in Figure 2, the sensing units 62 are positioned behind the draper belts 42A, 42B, and specifically are mounted to the rear wall 24 of the table 22 of the header 12. In this position, at least some of the crop material which passes over the belts 42A, 42B and is not conveyed substantially transversely towards the centre of the header 12 (in the direction of arrow X as described herein) is incident on the detection surface of the sensing units 62. Accordingly, a measurement can be taken relating to the amount of grain present in material which is falling into the table 22 and which would likely be lost.

Figure 3 illustrates the position of a sensing unit 62 positioned downstream of the auger 36. Here, the sensing unit 62 is again mounted to the rear wall 24 of the table 22 and in a location where material which passes over the auger 38 and is not conveyed substantially transversely towards the centre of the header 12 and instead travels substantially along direction Y shown in Figure 3 is incident on the detection surface 64 of the sensing unit 62. As above, a measurement can be taken relating to the amount of grain present in material which is falling into the table 22 and which would likely be lost.

As discussed herein, sensing unit(s) 62 comprises a piezoelectric sensor configured to output an electrical signal which is proportional to the force of material incident on the detection surface 64. In variants, the sensing unit(s) may instead comprise electrical, optical and/or mechanical sensors, for example, configured to measure an impact parameter associated with the impact of material with a detection surface.

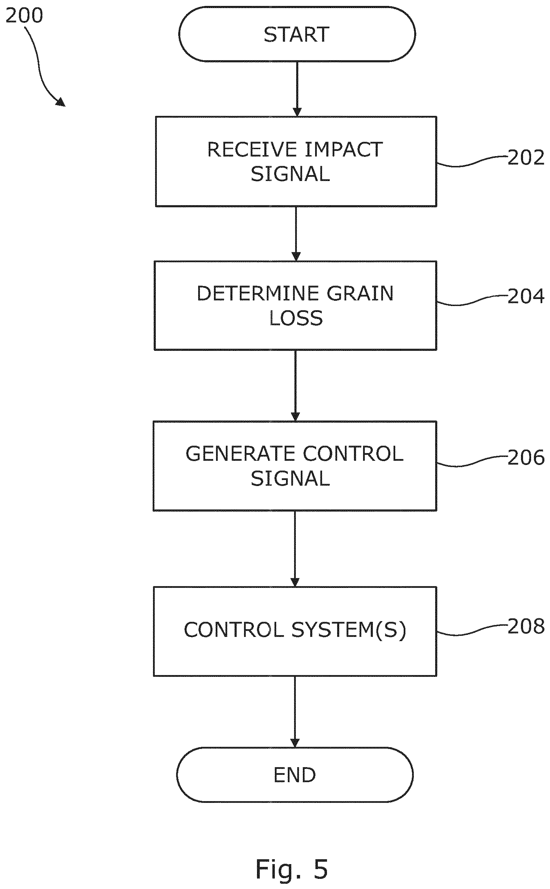

An embodiment of a method 200 of the present invention is illustrated in Figure 5.

At step 202, an impact signal is received from the sensing unit 62 and is utilised to determine a grain loss associated with the harvesting process, and specifically associated with the header 12 (steps 204 - 208). At step 204, the impact signal is analysed to extract an impact parameter indicative of a force and/or frequency of material incident on the detection surface 64 of the sensing unit. As discussed herein, through analysis of the sensor response from sensing unit 62 individual grain impacts on the detection surface 64 of the sensing unit 62 can be identified, and a measure of grain loss determined therefrom. Using the measurement of grain loss, one or more systems of the harvester 10 and/or the header 12 are controlled based thereon (steps 206 and 208). Specifically, in step 206, a control signal is generated for controlling operation of the one or more systems in a desired manner, and at step 208, this control signal is output to, for example, a control unit (120A, 120B) associated the relevant system(s) to be controlled for controlling operation of those system(s) in the desired manner.

To reduce the grain lost during a harvesting process, the method 200 and in particular step 208 of the method 200 may include controlling an operational speed of one or more systems of the harvester 10. For example, the method 200 may include reducing a forward speed of the machine in dependence on the determined grain loss. The method 200 may include controlling an operational speed of the header 12 or components thereof, e.g. the reel(s) 30, auger(s) 36, conveyor(s) 42, belt(s) 44 and the like, or other implement suitably coupled to the harvester 10 in dependence on the determined grain loss. Additionally or alternatively, the method 200 may include controlling a height, position, orientation, etc. of the header 12 or one or more components thereof in dependence on the determined grain loss.

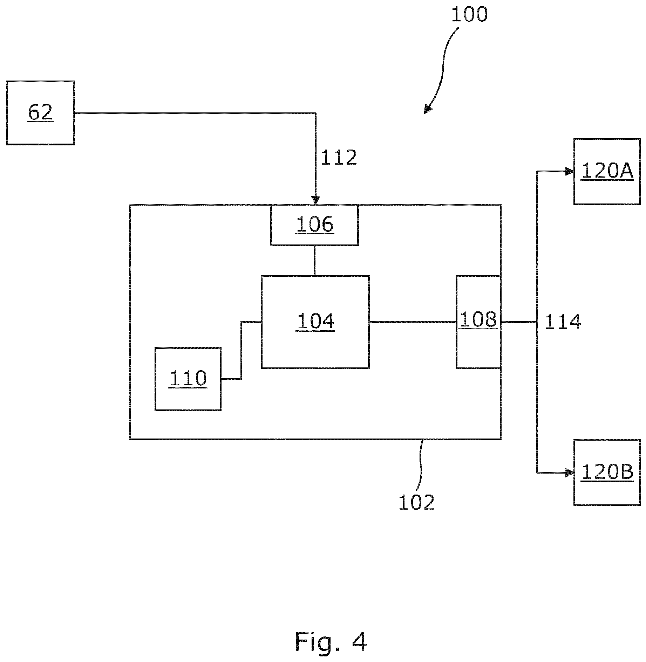

Figure 4 is a schematic illustration of an embodiment of a control system 100 in accordance with the invention, and its functionality within a wider system for agricultural machines (e.g. combine harvester 10). As discussed herein, the control system 100 is operable to control one or more operational parameters of an agricultural machine and/or one or more components thereof (e.g. header 12, or components of header 12) in dependence on a determined grain loss, as determined in the manner described herein using sensing units 62.

Here, the control system 100 comprises a controller 102 having an electronic processor 104, an electronic input 106, an electronic output 108 and memory 110. The processor 104 is operable to access the memory 110 and execute instructions stored therein to perform given functions, specifically to cause performance of the method 200 of Figure 5 in the manner described hereinabove, and ultimately generate and output a control signal(s) 114 from output 108 for controlling operation of one or more operational parameters of the harvester 10 or header 12 following analysis of data from one or more sensing units (e.g. units 62). In the illustrated embodiment, the processor 104 is operable to receive an impact signal from the sensing unit/s 62, where the impact signal comprises a measurement of an impact parameter indicative of a force and/or frequency of material incident on a detection surface 64 of the sensing unit 62. The impact signal here is in the form of input signals 112 received at electronic input 106 of controller 102. The control signals 114 are output via electronic output 108 to respective control units 120A, 120B associated with one or more operational parameters of the harvester 10 or the header 12. For example, in this embodiment, control unit 120A is associated with motion of the harvester 10 and may be utilised to control a forward speed of the harvester 10, for example. Control unit 120B is associated with the operation of header 12, and may be utilised to control operation of one or more components of the header 12, including the reel/s 30, the auger/s 36 and/or draper belt/s 42.

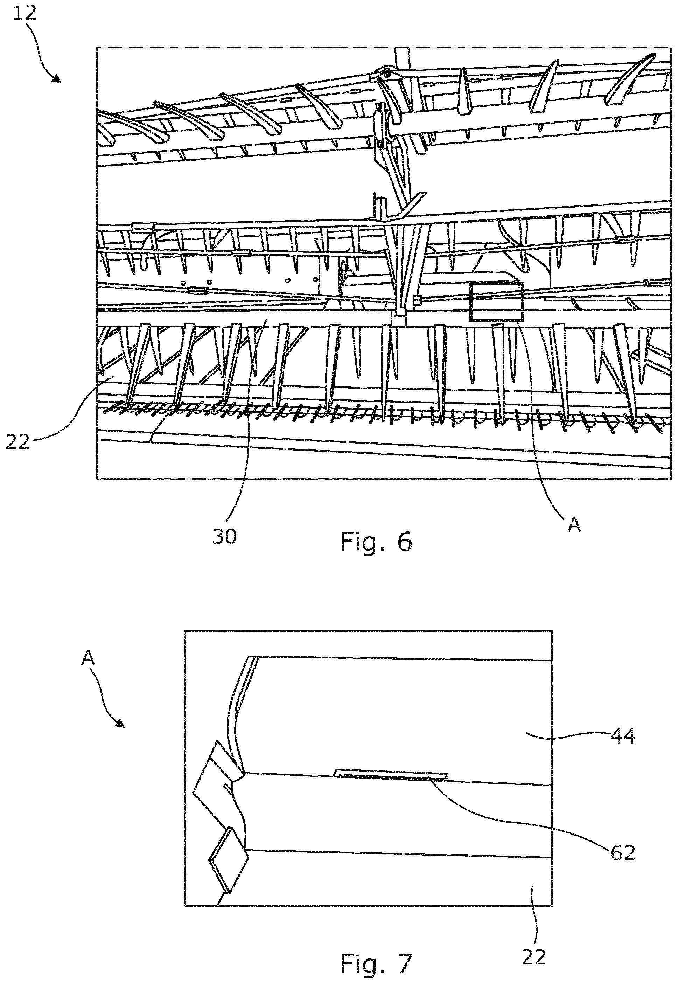

Figures 6 to 10 further illustrate different locations for the sensing units 52.

For example, Figures 6 and 7 illustrate header 12 with the sensing unit 62 positioned at a front edge of the central belt 44, specifically for capturing a measure of material falling through the gap between the front edge of the belt 44 and the table 22.

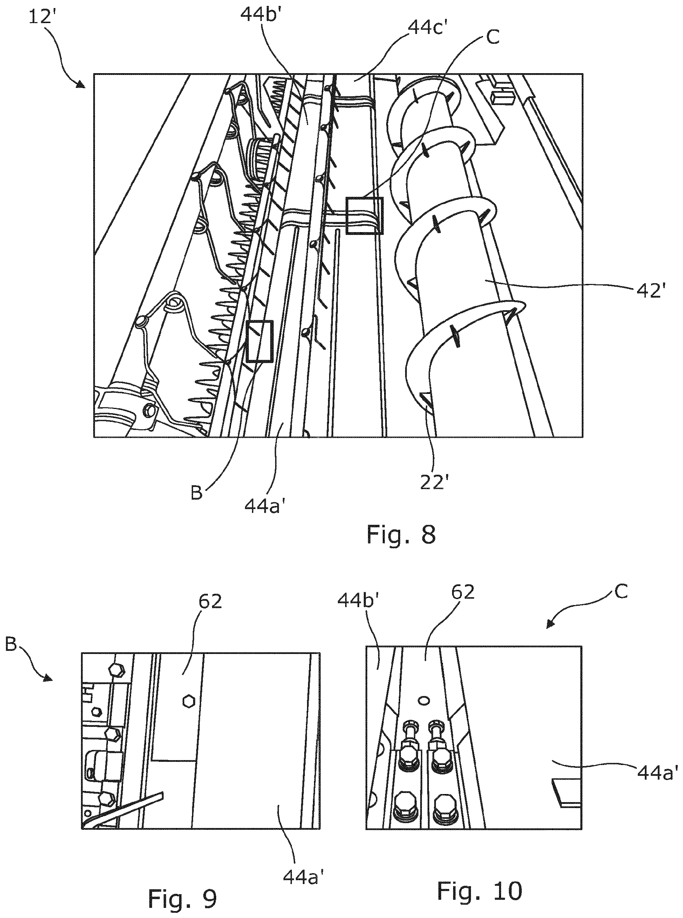

Figures 8 to 10 illustrate a second embodiment, here header 12' which includes a series of longitudinal belts 44a', 44b', 44c' for transferring crop to one of two (or more) transverse augers 42'. In this embodiment, sensing units 62 are positioned at a front edge of the belts 44a', etc. as illustrated in Figure 9, and/or between adjacent belts 44a', 44b', e.g., as shown in Figure 10. This may provide a measure of the material loss through gaps between adjacent belts.

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

## Claims

1. A header (12) for a harvesting machine (10), the header (12) comprising:
one or more crop-engaging components (30, 36, 42, 44); and
a sensing unit (62) positioned within a flow path of material and downstream of at least one of the one or more crop-engaging components (30, 36, 42, 44);
wherein the sensing unit (62) is configured, in use, to measure an impact parameter indicative of a force and/or frequency of material incident on a detection surface (64) of the sensing unit (62); **characterised in that**
the crop-engaging component/s (30, 36, 42, 44) include a plurality of belts (42, 44) configured such that an interface is formed therebetween, the interface forming a gap through which at least some of the conveyed crop material may fall and wherein the sensing unit (62) is positioned adjacent said gap such that material falling through the gap impacts the detection surface (64) of the sensing unit (62).

2. A header (12) as claimed in claim 1, wherein the sensing unit (62) is positioned adjacent to the crop-engaging component(s) (30, 36, 42, 44).

3. A header (12) as claimed in claim 1 or claim 2, wherein the crop-engaging component/s (30, 36, 42, 44) includes an auger (36) and/or one or more belts (42, 44) configured to convey cut crop material inwardly towards the centre of the header (12); and wherein the sensing unit (62) is positioned behind the auger/s or belt/s (36, 42, 44) such that crop material which passes over the auger/s or belt/s (36, 42, 44) and not conveyed substantially transversely towards the centre of the header (12) is incident on the detection surface (64) of the sensing unit (62).

4. A header (12) as claimed in any preceding claim, wherein:
the plurality of belts (42, 44) include at least one belt (42) configured to convey material in a substantially transverse direction across a width of the header (12) and at least one belt (44) configured to convey material in a substantially longitudinal direction; and
the plurality of belts (42, 44) are configured such that an interface is formed therebetween where conveyed crop material is passed from one belt to another.

5. A header (12) as claimed in any preceding claim, wherein the sensing unit (62) is coupled to a table (22) of the header (12); optionally wherein sensing unit (62) is positioned within the header (12), in a position with respect to the table (22) of the header (12) such that material falling into or otherwise being directed into the table (22) may impact the detection surface (64) of the sensing unit (62).

6. A header (12) of any preceding claim, wherein the sensing unit (62) comprises an acoustic-electric sensing means configured to output an electrical signal which is proportional to the force of material incident on the detection surface (64) of the sensing unit (62).

7. A control system (100) for controlling operation of one or more systems of an agricultural machine (10), the control system comprising one or more controllers (102) configured to:
receive an impact signal (112) from a sensing unit (62) of a header (12) of any preceding claim, the impact signal comprising a measurement of an impact parameter indicative of a force and/or frequency of material incident on a detection surface (64) of the sensing unit (62);
determine, in dependence on the received impact signal, a measurement of grain loss associated with the agricultural machine (10); and
generate and output one or more control signals (114) for controlling operation of one or more systems of the agricultural machine (10) in dependence on the determined grain loss.

8. A control system (100) as claimed in claim 7, operable to control operation of a user interface associated with the machine (10) to provide an indication to the operator of the machine of the determined grain loss associated with the measured impact parameter.

9. A control system (100) as claimed in claim 7 or claim 8, operable to control an operational speed of the machine (10) or one or more components thereof; optionally wherein the operational speed comprises a forward speed of the machine.

10. A control system (100) as claimed in any of claims 7 to 9, operable to control an operational speed of the header (12) or components thereof, including one or more of: a reel (30), auger(s) (36), conveyor(s), and belt(s) (42, 44), in dependence on the determined grain loss.

11. A control system (100) of any of claims 7 to 10, operable to control one or more of: a height, a position and/or an orientation of the header (12), or one or more components thereof, in dependence on the determined grain loss.

12. A control system (100) of any of claims 7 to 11, wherein the control system is:
communicable with one or more further control units (120) associated with the operation of the header (12), its component(s) and/or the agricultural machine (10);
operable to receive, from the one or more further control units (120), one or more operational signals indicative of one or more operational parameters of the header (12), component/s and/or the agricultural machine; and
operable to determine the measurement of grain loss in dependence on the received operational signal/s.

13. A control system (100) as claimed in claim 12, wherein the one or more operational parameters include one or more of:
a forward speed of the agricultural machine (10);
an operational speed of the header (12); and/or
an operational speed of one or more components of the header (12).

14. A method (200) of controlling operation of one or more systems of an agricultural machine, comprising:
receiving (202) an impact signal from a sensing unit of a header of any of claims 1 to 6, the impact signal comprising a measurement of an impact parameter indicative of a force and/or frequency of material incident on a detection surface of the sensing unit;
determining (204), in dependence on the received impact signal, a measurement of grain loss associated with the agricultural machine; and
controlling (206, 208) operation of one or more systems of the agricultural machine in dependence on the determined grain loss.

15. An agricultural machine (10):
comprising or being coupled to a header (12) of any of claims 1 to 6.

## Patentansprüche

1. Vorbau (12) einer Erntemaschine (10), wobei der Vorbau (12) aufweist:
mindestens eine mit dem Erntegut in Wechselwirkung tretende Komponente (30, 36, 42, 44); und
eine sensierende Einheit (62), die in dem Flusspfad des Materials und stromabwärts mindestens einer der mindestens einen mit dem Erntegut in Wechselwirkung tretenden Komponente (30, 36, 42, 44) angeordnet ist;
wobei die sensierende Einheit (62) dazu ausgebildet ist, im Betrieb einen Auftreffparameter, der eine Kraft und/oder eine Frequenz von auf eine Detektionsoberfläche (64) der sensierenden Einheit (62) auftreffenden Materials indiziert, zu messen; **dadurch gekennzeichnet, dass**
die mindestens eine mit dem Erntegut in Wechselwirkung tretende Komponente (30, 36, 42, 44) mehrere Gurte (42, 44) aufweist, die derart ausgebildet sind, dass zwischen diesen eine Übergangsstelle oder ein Interface gebildet ist, wobei die Übergangsstelle oder das Interface einen Spalt bildet, durch den mindestens ein Teil des geförderten Erntegutmaterials fallen kann und wobei die sensierende Einheit (62) derart benachbart zu dem Spalt angeordnet ist, dass Material, welches durch den Spalt fällt, auf die Detektionsoberfläche (64) der sensierenden Einheit (62) auftrifft.

2. Vorbau (12) nach Anspruch 1, wobei die sensierende Einheit (62) benachbart der mindestens einen mit dem Erntegut in Wechselwirkung tretenden Komponente (30, 36, 42, 44) angeordnet ist.

3. Vorbau (12) nach Anspruch 1 oder Anspruch 2, wobei die mindestens eine mit dem Erntegut in Wechselwirkung tretende Komponente (30, 36, 42, 44) einen Förderer oder eine Förderschnecke (36) aufweist und/oder mindestens ein Gurt (42, 44) dazu ausgebildet ist, geschnittenes Erntegutmaterial einwärts in Richtung der Mitte des Vorbaus (12) zu fördern; und wobei die sensierende Einheit (629 hinter dem mindestens einen Förderer oder der mindestens einen Förderschnecke oder dem mindestens einen Gurt (36, 42, 44) derart angeordnet ist, dass Erntegutmaterial, welches den mindestens einen Förderer oder die mindestens eine Förderschnecke oder den mindestens einen Gurt (36, 42, 44) passiert und nicht im Wesentlichen transversal in Richtung der Mitte des Vorbaus (12) gefördert wird, auf die Detektionsoberfläche (64) der sensierenden Einheit (62) auftrifft.

4. Vorbau (12) nach einem der vorhergehenden Ansprüche, wobei:
die mehreren Gurte (42, 44) mindestens einen Gurt (42) aufweisen, der dazu ausgebildet ist, Material in eine im Wesentlichen transversal orientierte Richtung zu fördern in Breitenrichtung des Vorbaus (12) und mindestens ein Gurt (44) dazu ausgebildet ist, Material in eine im Wesentlichen in Längsrichtung orientierte Richtung zu fördern; und
die mehreren Gurte (42, 44) derart ausgebildet sind, dass zwischen diesen eine Übergangsstelle oder ein Interface gebildet ist, an der oder dem gefördertes Erntegutmaterial von einem Gurt zu dem anderen Gurt übertritt.

5. Vorbau (12) nach einem der vorhergehenden Ansprüche, wobei die sensierende Einheit (62) mit einem Tisch, einem Bett oder einem Boden (22) des Vorbaus (12) gekoppelt ist; wobei vorzugsweise die sensierende Einheit (62) in dem Vorbau (12) an einer Position hinsichtlich des Tischs, Betts oder Bodens (22) des Vorbaus (12) derart angeordnet ist, dass Material, welches in den Tisch, in das Bett oder auf den Boden (22) fällt oder anderweitig in oder auf diesen geleitet wird, auf die Detektionsoberfläche (64) der sensierenden Einheit (62) auftreffen kann.

6. Vorbau (12) nach einem der vorhergehenden Ansprüche, wobei die sensierende Einheit (62) ein akustisch-elektrisches Sensormittel aufweist, welches für eine Ausgabe eines elektrischen Signals ausgebildet ist, welches proportional zu der Kraft des auf die Detektionsoberfläche (64) der sensierenden Einheit (62) auftreffenden Materials.

7. Steuer- oder Regelsystem (100) zum Steuern oder Regeln des Betriebs mindestens eines Systems einer landwirtschaftlichen Maschine (10), wobei das Steuer- oder Regelsystem mindestens einen Controller (102) aufweist, der für das Folgende ausgebildet ist:
ein Empfangen eines Auftreffsignals (112) von einer sensierenden Einheit (62) eines Vorbaus (12) nach einem der vorhergehenden Ansprüche, wobei das Auftreffsignal eine Messung eines Auftreffparameters aufweist, der eine Kraft und/oder eine Frequenz von auf eine Detektionsoberfläche (64) der sensierenden Einheit (62) auftreffendem Material indiziert;
ein Ermitteln einer Messung eines Korn- oder Getreideverlusts, der der landwirtschaftlichen Maschine (10) zugeordnet ist, in Abhängigkeit von dem empfangenen Auftreffsignal; und
ein Erzeugen und Ausgeben mindestens eines Steuer- oder Regelsignals (114) zum Steuern oder Regeln des Betriebs mindestens eines Systems der landwirtschaftlichen Maschine (10) in Abhängigkeit von dem ermittelten Korn- oder Getreideverlust.

8. Steuer- oder Regelsystem (100) nach Anspruch 7, welches betreibbar ist zur Steuerung oder Regelung eines Betriebs eines Nutzer-Interfaces, welches der Maschine (10) zugeordnet ist, zur Bereitstellung eines Hinweises an den Betreiber der Maschine hinsichtlich des ermittelten Korn- oder Getreideverlusts, der dem gemessenen Auftreffparameter zugeordnet ist.

9. Steuer- oder Regelsystem (100) nach Anspruch 7 oder Anspruch 8, welches betreibbar ist zur Steuerung oder Regelung einer Betriebsgeschwindigkeit der Maschine (10) oder mindestens einer Komponente derselben; wobei vorzugsweise die Betriebsgeschwindigkeit eine Vorwärts-Fahrgeschwindigkeit der Maschine aufweist.

10. Steuer- oder Regelsystem (100) nach einem der Ansprüche 7 bis 9, welches betreibbar ist zur Steuerung der Regelung einer Betriebsgeschwindigkeit des Vorbaus (12) oder von Komponenten desselben mit einer Trommel, einer Walze, einer Haspel oder einem Einzugrechen (30) und/oder mindestens einem Förderer oder Schneckenförderer (36) und/oder mindestens einem Gurt (42, 44) in Abhängigkeit von dem ermittelten Korn- oder Getreideverlust.

11. Steuer- oder Regelsystem (100) nach einem der Ansprüche 7 bis 10, welches betreibbar ist zum Steuern oder Regeln einer Höhe und/oder einer Position und/oder einer Orientierung des Vorbaus (12) oder mindestens einer Komponente desselben in Abhängigkeit von dem ermittelten Korn- oder Getreideverlust.

12. Steuer- oder Regelsystem (100) nach einem der Ansprüche 7 bis 11, wobei das Steuer- oder Regelsystem:
kommunizieren kann mit mindestens einer weiteren Steuer- oder Regeleinheit (120), die dem Betrieb des Vorbaus (12), mindestens einer Komponente des Vorbaus (12) und/oder der landwirtschaftlichen Maschine (100) zugeordnet ist;
betreibbar ist zum Empfangen mindestens eines Betriebssignals, welches mindestens einen Betriebsparameter des Vorbaus (12), mindestens einer Komponente und/oder der landwirtschaftlichen Maschine indiziert, von der mindestens einen weiteren Steuer- oder Regeleinheit (120); und
betreibbar ist zur Ermittlung der Messung des Korn- oder Getreideverlusts in Abhängigkeit von dem mindestens einen empfangenen Betriebssignal.

13. Steuer- oder Regelsystem (100) nach Anspruch 12, wobei der mindestens eine Betriebsparameter
eine Vorwärts-Fahrgeschwindigkeit der landwirtschaftlichen Maschine (10) und/oder
eine Betriebsgeschwindigkeit des Vorbaus (12) und/oder
eine Betriebsgeschwindigkeit mindestens einer Komponente des Vorbaus (12) aufweist.

14. Verfahren (200) zum Steuern oder Regeln des Betriebs mindestens eines Systems einer landwirtschaftlichen Maschine mit:
einem Empfangen (202) eines Auftreffsignals von einer sensierenden Einheit eines Vorbaus nach dem der Ansprüche 1 bis 6, wobei das Auftreffsignal eine Messung eines Auftreffparameters aufweist, der eine Kraft und/oder eine Frequenz eines Auftreffens von Material auf eine Detektionsoberfläche der sensierenden Einheit indiziert;
ein Ermitteln (204) einer Messung eines Korn- oder Getreideverlusts, welches der landwirtschaftlichen Maschine zugeordnet ist, in Abhängigkeit von dem empfangenen Auftreffsignal; und
einem Steuern oder Regeln (206, 208) eines Betriebs mindestens eines Systems der landwirtschaftlichen Maschine in Abhängigkeit von dem ermittelten Korn- oder Getreideverlust.

15. Landwirtschaftliche Maschine (10), die einen Vorbau (12) nach einem der Ansprüche 1 bis 6 aufweist oder mit diesem gekoppelt ist.

## Revendications

1. Tête de travail (12) destinée à une moissonneuse (10), la tête de travail (12) comprenant :
un ou plusieurs composants de couplage de culture (30, 36, 42, 44) ; et
une unité de détection (62) positionnée sur un trajet de circulation de matériau et en aval d'au moins l'un des un ou plusieurs composants de couplage de culture (30, 36, 42, 44) ;
dans laquelle l'unité de détection (62) est configurée, en utilisation, de manière à mesurer un paramètre de choc représentatif d'une énergie et/ou d'une fréquence de matériau incident sur une surface de détection (64) de l'unité de détection (62) ; **caractérisée en ce que**
le ou les composants de couplage de culture (30, 36, 42, 44) comportent une pluralité de bandes (42, 44) configurées de telle sorte qu'une interface est formée entre deux de celles-ci, l'interface formant un intervalle à travers lequel au moins une certaine partie du matériau de récolte transféré peut tomber et dans laquelle l'unité de détection (62) est positionnée de manière adjacente audit intervalle de telle sorte que le matériau tombant à travers l'intervalle frappe la surface de détection (64) de l'unité de détection (62).

2. Tête de travail (12) selon la revendication 1, dans laquelle l'unité de détection (62) est positionnée de manière adjacente au ou aux composants de couplage de culture (30, 36, 42, 44).

3. Tête de travail (12) selon la revendication 1 ou 2, dans laquelle le ou les composants de couplage de culture (30, 36, 42, 44) comportent un godet (36) et/ou une ou plusieurs bandes (42, 44) configurés de manière à transférer le matériau de culture coupé vers l'intérieur, vers le centre de la tête de travail (12) ; et dans laquelle l'unité de détection (62) est positionnée derrière le ou les godets ou bandes (36, 42, 44) de telle sorte que du matériau de culture qui passe au-dessus du ou des godets ou bandes (36, 42, 44) et n'est pas transféré sensiblement transversalement vers le centre de la tête de travail (12) frappe la surface de détection (64) de l'unité de détection (62).

4. Tête de travail (12) selon l'une quelconque des revendications précédentes, dans laquelle ;
les bandes de la pluralité de bandes (42, 44) comportent au moins une bande (42) configurée de manière à transférer le matériau dans une direction sensiblement transversale à travers la largeur de la tête de travail (12) et au moins une bande (44) configurée de manière à transférer le matériau dans une direction sensiblement longitudinale, et
les bandes de la pluralité de bandes (42, 44) sont configurées de telle sorte qu'une interface, sur laquelle le matériau de culture transporté passe d'une première bande vers une autre, est formée entre deux de celles-ci.

5. Tête de travail (12) selon l'une quelconque des revendications précédentes, dans laquelle l'unité de détection (62) est couplée à une table (22) de la tête de travail (12) ; dans laquelle, en variante, l'unité de détection (62) est positionnée à l'intérieur de la tête de travail (12), dans une position par rapport à la table (22) de la tête de travail (12) telle que le matériau tombant sur la table (22), ou étant dirigé d'une autre manière vers celle-ci, peut frapper la surface de détection (64) de l'unité de détection (62).

6. Tête de travail (12) selon l'une quelconque des revendications précédentes, dans laquelle l'unité de détection (62) comprend un moyen de détection électroacoustique configuré de manière à délivrer un signal électrique qui est proportionnel à l'énergie du matériau incident sur la surface de détection (64) de l'unité de détection (62).

7. Dispositif de commande (100) destiné à commander le fonctionnement d'un ou plusieurs dispositifs d'une machine agricole (10), le dispositif de commande comprenant une ou plusieurs unités de commande (102) configurées de manière à :
recevoir un signal de choc (112) à partir d'une unité de détection (62) d'une tête de travail (12) selon l'une quelconque des revendications précédentes, le signal de choc comprenant une mesure d'un paramètre de choc représentatif d'une énergie et/ou d'une fréquence de matériau incident sur une surface de détection (64) de l'unité de détection (62) ;
déterminer, en fonction du signal de choc reçu, une mesure de perte de grain associée à la machine agricole (10) ; et
à produire et à délivrer un ou plusieurs signaux de commande (114) afin de commander le fonctionnement d'un ou plusieurs dispositifs de la machine agricole (10) en fonction de la perte de grain déterminée.

8. Dispositif de commande (100) selon la revendication 7, pouvant être utilisé de manière à commander le fonctionnement d'une interface d'utilisateur associée à la machine (10) afin de délivrer à l'opérateur de la machine une indication sur la perte de grain déterminée associée au paramètre de choc mesuré.

9. Dispositif de commande (100) selon la revendication 7 ou 8, pouvant être utilisé de manière à commander une vitesse opérationnelle de la machine (10) ou d'un ou plusieurs de ses composants ; dans lequel, en variante, la vitesse opérationnelle comprend une vitesse d'avance de la machine.

10. Dispositif de commande (100) selon l'une quelconque des revendications 7 à 9, pouvant être utilisé de manière à commander une vitesse opérationnelle de la tête de travail (12) ou de certains de ses composants, comportant un ou plusieurs composants parmi : une roue (30), un ou plusieurs godets (36), un ou plusieurs convoyeurs et une ou plusieurs bandes (42, 44), en fonction de la perte de grain déterminée.

11. Dispositif de commande (100) selon l'une quelconque des revendications 7 à 10, pouvant être utilisé de manière à commander un ou plusieurs paramètres parmi : une hauteur, une position et/ou une orientation de la tête de travail (12), ou d'un ou plusieurs de ses composants, en fonction de la perte de grain déterminée.

12. Dispositif de commande (100) selon l'une quelconque des revendications 7 à 11, dans lequel le dispositif de commande :
permet de communiquer avec une ou plusieurs unités de commande (120) supplémentaires associées au fonctionnement de la tête de travail (12), de son ou ses composants et/ou de la machine agricole (10),
permet de recevoir, à partir des une ou plusieurs unités de commande (120) supplémentaires, un ou plusieurs signaux opérationnels représentatifs d'un ou plusieurs paramètres opérationnels de la tête de travail (12), d'un ou plusieurs composants et/ou de la machine agricole ; et
permet de déterminer la mesure de perte de grain en fonction du ou des signaux opérationnels reçus.

13. Dispositif de commande (100) selon la revendication 12, dans lequel le ou plusieurs paramètres opérationnels comportent un ou plusieurs paramètres parmi :
une vitesse d'avance de la machine agricole (10) ;
une vitesse opérationnelle de la tête de travail (12) ; et/ou
une vitesse opérationnelle d'un ou plusieurs composants de la tête de travail (12).

14. Procédé (200) de commande du fonctionnement d'un ou plusieurs dispositifs d'une machine agricole, comprenant :
la réception (202) d'un signal de choc à partir d'une unité de détection d'une tête de travail selon l'une quelconque des revendications 1 à 6, le signal de choc comprenant une mesure d'un paramètre de choc représentatif d'une énergie et/ou fréquence de matériau incident sur une surface de détection de l'unité de détection ;
la détermination (204), en fonction du signal de choc reçu, d'une mesure de perte de grain associée à la machine agricole ; et
la commande (206, 208) du fonctionnement d'un ou plusieurs dispositifs de la machine agricole en fonction de la perte de grain déterminée.

15. Machine agricole (10) :
comprenant une tête de travail (12) selon l'une quelconque des revendications 1 à 6 ou étant couplée à cette dernière.
